Europäisches Patentamt

European Patent Office

Office européen des brevets

(11) Veröffentlichungsnummer: **0 310 986 B1**

# EUROPÄISCHE PATENTSCHRIFT

(45) Veröffentlichungstag der Patentschrift: **23.09.92**

(51) Int. Cl.⁵: **C07F 5/00**, C09D 11/14

(21) Anmeldenummer: **88116307.5**

(22) Anmeldetag: **01.10.88**

(54) **Neue Titan(IV)-chelate und ihre Verwendung in Druckfarben.**

(30) Priorität: **05.10.87 DE 3733608**

(43) Veröffentlichungstag der Anmeldung:
**12.04.89 Patentblatt 89/15**

(45) Bekanntmachung des Hinweises auf die
Patenterteilung:
**23.09.92 Patentblatt 92/39**

(84) Benannte Vertragsstaaten:
**BE DE FR GB IT NL**

(56) Entgegenhaltungen:
**EP-A- 0 037 297**
**DE-B- 1 202 275**
**US-A- 3 090 728**
**US-A- 4 617 408**

(73) Patentinhaber: **HÜLS AKTIENGESELLSCHAFT**
**Paul-Baumann-Strasse 1**
**W-4370 Marl 1(DE)**

(72) Erfinder: **Barfurth, Dieter**
**Adenauerstrasse 34**
**W-5210 Troisdorf-Spich(DE)**
Erfinder: **Lindzus, Claus**
**Dürener Strasse 44**
**W-5000 Köln 41(DE)**
Erfinder: **Nestler, Heinz, Dr.**
**Rembrandtstrasse 73**
**W-5210 Troisdorf-Eschmar(DE)**

**Beschreibung**

Die Titanacetylacetonate zeigen beim Einsatz in den genannten Druckfarben jedoch folgende Nachteile:

Aufgrund ihrer starken rotbraunen Eigenfarbe verleihen sie weißen Druckfarben einen gelblichen Stich. Zusätzlich entwickeln sie beim Trocknen auf dem Untergrund oft einen als störend empfundenen Geruch. Weiterhin tritt die obengenannte Verfärbung der Farbe besonders bei solchen zu bedruckenden Materialien ein, die Antioxidantien auf Phenolbasis enthalten. Solche Antioxidantien sind z. B. in Polyolefinfolien oder in Heißsiegelmassen enthalten, so daß Druckfarben mit Titanacetylacetonat-Gehalten zum Bedrucken dieser Materialien ohne Verfärbung des Materials nicht eingesetzt werden können.

Es bestand deshalb die Aufgabe, ein Titanchelat zu entwickeln, bei dem die vernetzende Wirkung der Titankomponente in gleicher Weise wie beim Titanacetylacetonat herabgesetzt ist, so daß eine Vernetzung und Haftung der mit diesen Chelaten versetzten Verbindungen erst während oder nach dem Verdunsten des Lösungsmittels stattfindet. Weiterhin soll das gesuchte Chelat keine oder nur äußerst geringe Verfärbung bei der Verwendung in Druckfarben auf Basis von Celluloseestern zeigen.

In Erfüllung dieser Aufgabe wurden nun Alkoxy-Titan(IV)-chelate gefunden, die dadurch gekennzeichnet sind, daß sie als Chelatbildner Zitronensäureester enthalten. Zum Einsatz in den obengenannten Druckfarben gelangen diese Titanchelate als alkoholische Lösungen, so daß diese Lösungen und deren Verwendung in Druckfarben ebenfalls in Erfüllung der obengenannten Aufgabe gefunden wurden.

Die Alkoxygruppen der neuen Titanchelate haben vorzugsweise 2 bis 4 C-Atome; sie können jedoch auch für spezielle Anwendungen bis zu einschließlich 8 C-Atome haben, die auch durch Sauerstoffatome unterbrochen sein können.

Die Zitronensäureesterkomponente der neuen Chelate leitet sich von Zitronensäurepartialestern, vorzugsweise von den Zitronensäure-dialkylestern oder -monoalkylestern ab, deren Alkylgruppen vorzugsweise 2 bis 4 C-Atome aufweisen.

In den neuen Chelaten können eine oder zwei der Alkoxygruppen eines Titansäureesters durch die genannten Zitronensäureestergruppen ersetzt sein. Demzufolge kann das Verhältnis der an das zentrale T-Atom gebundenen Alkoxygruppen zu den Zitronensäureestergruppen zwischen 1 : 1 und 3 : 1 liegen. Es können auch zusätzlich eine oder mehrere der ursprünglichen Alkoxygruppen durch andere an sich bekannte Chelatbildner ersetzt sein.

Die neuen Titanchelate lassen sich auf einfache Weise herstellen, indem man Titansäureester mit der dem gewünschten Endprodukt entsprechenden Menge an Zitronensäureester umsetzt und den bei der Reaktion frei werdenden Alkohol anschließend abdestilliert. Die Umsetzung wird zweckmäßigerweise in der Weise durchgeführt, daß man den Titansäureester dem auf Reaktionstemperatur erwärmten Zitronensäureester hinzufügt. Die Reaktionstemperatur liegt im Bereich zwischen 20 und 100 °C, vorzugsweise zwischen 60 und 80 °C. Die Umsetzung ist im allgemeinen nach einer Reaktionsdauer von 2 bis 5 Stunden beendet, wenn im bevorzugten Temperaturbereich gearbeitet wird. Zur Herstellung der reinen Ester wird eine solche Menge an Alkohol abdestilliert, die dem vorgelegten Zitronensäureester entspricht.

Wenn man die alkoholischen Lösungen der neuen Titanchelate erhalten will, ist es selbstverständlich nicht notwendig, den gesamten bei der Umsetzung frei werdenden Alkohol abzudestillieren. Es wird dann nur so viel Alkohol abdestilliert, wie zur Herstellung der einsatzfertigen Chelate notwendig ist. Gegebenenfalls braucht auch kein Alkohol abdestilliert zu werden. Die auf diese Weise erhaltenen Lösungen haben einen Gehalt an Chelaten, der über 80 Gew.-% liegt.

Die Lösungen, die gegebenenfalls mit Alkoholen oder anderen Lösungsmitteln weiter verdünnt werden können, zeigen beim Einsatz in Druckfarben hinsichtlich Vernetzung und Haftung mindestens vergleichbare, überwiegend etwas bessere Eigenschaften gegenüber Titanacetylacetonat (TiACA). Mengen zwischen 1 und 10 vorzugsweise zwischen 1 und 4 Gew.-% bezogen auf das Gewicht der Druckfarbe, lassen sich einmischen, ohne eine Gelierung der Druckfarbe zu bewirken, besitzen jedoch die Fähigkeit, nach der Bedruckung die Haftung der Farbe auf dem Untergrund erheblich zu verbessern. Die Lagerfähigkeit dieser Druckfarben ist gut (Beispiel 7) und vergleichbar gut wie bei TiACA-Zusatz. Bei Lagerung über Monate (wobei nur eine Lagerung von wenigen Wochen üblich ist) erfolgt nur geringer Anstieg der Viskosität. (Erst eine Viskosität ab 3000 wäre schwierig, aber durch Verdünnen mit geringen Mengen von üblichen Lösungsmitteln zu beheben.)

Die erfindungsgemäßen Titanchelate der Zitronensäureester sind TiACA jedoch in entscheidender Weise überlegen, dadurch daß keine Verfärbung der Druckfarben, auch nicht von weißen Druckfarben, erfolgt. TiACA hat nämlich den Mangel, Druckfarben zu verfärben, wobei helle Druckfarben gelblich und weiße ($TiO_2$) Druckfarben sichtbar und deutlich gelb verfärbt werden, ohne daß bisher eine Abhilfe möglich war.

Die Eigenfarbe der neuen Chelate ist gelblich bis hellgelb. Überraschenderweise tritt auch keine Verfärbung ein, wenn diese Druckfarben auf solche Untergründe appliziert werden, die Antioxidantien auf Phenolbasis enthalten. Druckfarben mit Zusätzen der neuen Chelate bleiben geruchlos.

Die überraschende Verbesserung von Druckfarben mit Zusatz der neuen erfindungsgemäßen Chelate wird aus der Tabelle des Beispiels 8 erkennbar. Dort ist die Remission in % in Abhängigkeit von der Wellenlänge λ aufgetragen ( 100 % Remission aller Wellenlängen bewirkt optisch den Eindruck weiß). Weiße Druckfarbe mit Gehalten von TiACA zeigt geringe Remission im blauen Bereich(λ = 400 - 450 nm) bei hoher Remission im roten Bereich gegenüber der Vergleichsprobe. Das entspricht einer sichtbaren gelben Verfärbung. Die Ti-Chelate der Beispiele bewirken im blauen Bereich eine wenig verminderte Remission, sodaß optisch praktisch keine Verfärbung wahrnehmbar ist.

Diese Vermeidung der Verfärbung von Druckfarben durch die erfindungsgemäßen Titanchelate ermöglicht den Zusatz der Chelate auch dort bzw. in größeren Mengen auch in den Fällen, in denen die Verwender der Druckfarben bisher TiACA nicht tolerieren konnten.

Bei den Druckfarben, für die die erfindungsgemäßen Titanchelat-Lösungen eingesetzt werden, handelt es sich um an sich bekannte Druckfarben auf der Basis von Bindemitteln wie Nitrocellulose oder anderer Celluloseesterderivate, die durch Zusatz von modifiziertem Titansäureester vernetzen und aushärten und deren Haftung auf polymerem Untergrund durch Zusatz von modifizierten Titanaten verbessert wird. Die neuen Titanchelat-Lösungen zeigen die anfangs geschilderten Nachteile von Titanacetylacetonat-Lösungen nicht mehr oder in vernachlässigbarem Umfang.

Die Stoffe der Beispiele 1 bis 4 und 9 bis 11 haben die Formel

$$Ti\ (OR)_{4-n}\ (citrato)_n\ ,$$

worin R = $-C_2H_5$, $-C_3H_7$ oder i-bzw. n $-C_4H_9$,
n = 1 oder 2 und
citrato die Reste von Dialkylcitrat oder Monoalkylcitrat mit alkyl = R bedeuten.


Beispiel 1


Herstellung von Diethylcitrat-(2:1)-Titanchelat aus Ethyltitanat:


In einem 1 000-ml-Kolben, der mit Rührer, Thermometer, Tropftrichter und Rückflußkühler versehen ist, werden 446,4 g (1,8 Mol) Diethylcitrat vorgelegt und auf 80 °C erwärmt.

Anschließend werden 205,2 g (0,9 Mol) Ethyltitanat über einen Zeitraum von ca. 5 Stunden zugetropft. Nach beendeter Zugabe wird noch 30 Minuten bei 80 °C gerührt.

Erhalten wird eine hellgelbe Flüssigkeit mit folgenden Kennzahlen:

Brechungszahl $n_D^{20}$ :     ca. 1,46
Dichte (20 °C):     ca. 1,1 g/ml
Viskosität:     ca. 100 mPa · s
Titandioxidgehalt:     ca. 11,0 % $TiO_2$
Löslichkeit in Wasser < 0,5 %

In Isopropanol, Ethylacetat, Methylethylketon, Toluol und Methylenchlorid sind 10 Gew-%ige Lösungen mehr als 4 Wochen ohne Veränderungen beständig.

Aus der genannten Flüssigkeit wurden 2 Mol Ethanol je Mol Titanchelat (bei 30 °C und vermindertem Druck) entfernt.

| Analysen gefunden: | 45,6 % C | 6,6 % H | 12,3 % Ti |
|---|---|---|---|
| berechnet: | 45,6 % C | 6,3 % H | 12,6 % Ti |


Der Berechnung lag das Chelat mit zwei Gruppen $C_2H_5O$ und zwei Resten des Diethylcitrats je Ti der Formel $C_{24}H_{40}O_{16}Ti$ zugrunde.

| Brechungszahl $n_D^{20}$ | 1,49 |
|---|---|
| Dichte 20 °C | 1,24 g/ml |
| Viskosität (20 °C) | 8100 mPa · s |

Beispiel 2

Herstellung von Diethylcitrat-(2:1)-Titanchelat aus Isopropyltitanat:

In einem 1 000-ml-Kolben, der mit Rührer, Thermometer, Tropftrichter und Rückflußkühler versehen ist, werden 421,6 g (1,7 Mol) Diethylcitrat vorgelegt und bei 20 °C gehalten.

Anschließend werden 241,4 g (0,85 Mol) Isopropyltitanat über einen Zeitraum von ca. 3,5 Stunden zugetropft. Nach beendeter Zugabe wird noch 30 Minuten bei 20 °C gerührt.

Erhalten wird eine hellgelbe Flüssigkeit mit folgenden Kennzahlen:

Brechungszahl $n_D^{20}$ :  ca. 1,47

Dichte (20 °C):  ca. 1,1 g/ml

Viskosität:  ca. 500 mPa • s

Titandioxidgehalt:  ca. 10,3 % $TiO_2$

Löslichkeit in Wasser < 0,5 %

In Isopropanol, Ethylacetat, Methylethylketon, Toluol und Methylenchlorid sind 10 Gew-%ige Lösungen mehr als 4 Wochen ohne Veränderungen beständig.

Aus der genannten Flüssigkeit wurden 2 Mol Isopropanol je Mol Titanchelat (bei 30 °C und vermindertem Druck) entfernt.

| Analysen gefunden: | 47,1 % C | 6,7 % H | 12,3 % Ti |
|---|---|---|---|
| berechnet: | 47,3 % C | 6,7 % H | 12,1 % Ti |

Der Berechnung lag das Chelat mit zwei Isopropylresten und zwei Resten des Diethylcitrats je Ti der Formel $C_{26}H_{44}O_{16}Ti$ zugrunde.

| | |
|---|---|
| Brechungszahl $n_D^{20}$ | 1,49 |
| Dichte 20 °C | 1,23 g/ml |
| Viskosität (20 °C) | 22300 mPa • s |

Beispiel 3

Herstellung von Diethylcitrat-(2:1)-Titanchelat aus Butyltitanat:

In einem 1 000-ml-Kolben, der mit Rührer, Thermometer, Tropftrichter und Rückflußkühler versehen ist, werden 396,8 g (1,6 Mol) Diethylcitrat vorgelegt und auf 80 °C erwärmt.

Anschließend werden 272 g (0,8 Mol) Butyltitanat über einen Zeitraum von ca. 1,5 Stunden zugetropft. Nach beendeter Zugabe wird noch 30 Minuten bei 80 °C gerührt.

Erhalten wird eine orange-gelbe Flüssigkeit mit folgenden Kennzahlen:

Brechungszahl $n_D^{20}$ :  ca. 1,48

Dichte (20 °C):  ca. 1,1 g/ml

Viskosität:  ca. 140 mPa • s

Titandioxidgehalt:  ca. 9,6 % $TiO_2$

Löslichkeit in Wasser < 0,5 %

In Isopropanol, Ethylacetat, Methylethylketon, Toluol und Methylenchlorid sind 10 Gew-%ige Lösungen mehr als 4 Wochen ohne Veränderungen beständig.

Aus der genannten Flüssigkeit wurden 2 Mol T-Butanol je Mol Titanchelat (bei 30 °C und vermindertem Druck) entfernt.

| Analysen gefunden: | 48,9 % C | 7,1 % H | 11,8 % Ti |
|---|---|---|---|
| berechnet: | 48,8 % C | 7,0 % H | 11,6 % Ti |

Der Berechnung lag das Chelat mit zwei i-Buthylresten und zwei Resten des Diethylcitrats je Ti der Formel $C_{28}H_{48}O_{16}Ti$ zugrunde.

4

| Brechungszahl $n_D^{20}$ | 1,50 |
|---|---|
| Dichte 20 °C | 1,19 g/ml |
| Viskosität (20 °C) | 7050 mPa • s |

**Beispiel 4**

Herstellung von Diethylcitrat-(1:1)-Titanchelat aus Butyltitanat:

In einem 1 000-ml-Kolben, der mit Rührer, Thermometer, Tropftrichter und Rückflußkühler versehen ist, werden 248 g (1,0 Mol) Diethylcitrat vorgelegt und auf 80 °C erwärmt.

Anschließend werden 340 g (1,0 Mol) Butyltitanat über einen Zeitraum von ca. 1,5 Stunden zugetropft. Nach beendeter Zugabe wird noch 30 Minuten bei 80 °C gerührt.

Erhalten wird eine orange-gelbe Flüssigkeit mit folgenden Kennzahlen:

| Brechungszahl $n_D^{20}$ : | ca. 1,48 |
|---|---|
| Dichte (20 °C): | ca. 1,06 g/ml |
| Viskosität: | ca. 120 mPa • s |
| Titandioxidgehalt: | ca. 13,6 % $TiO_2$ |
| Löslichkeit in Wasser 0,5 % | |

In Isopropanol, Ethylacetat, Methylethylketon, Toluol und Methylenchlorid sind 10 Gew-%ige Lösungen mehr als 4 Wochen ohne Veränderungen beständig.

Aus der genannten Flüssigkeit wurden 3 Mol n-Butanol je Mol Titanchelat (bei 30 °C und vermindertem Druck) entfernt.

| Analysen gefunden: | 51,4 % C | 8,2 % H | 15,8 % Ti |
|---|---|---|---|
| berechnet: | 51,4 % C | 8,2 % H | 15,6 % Ti |

Der Berechnung lag das Chelat mit drei n-Butoxy-resten und einem Rest des Diethylcitrats je Ti der Formel $C_{22}H_{42}O_{10}Ti$ zugrunde.

| Brechungszahl $n_D^{20}$ | 1,50 |
|---|---|
| Dichte 20 °C | 1,13 g/ml |
| Viskosität (20 °C) | 1300 mPa • s |

Entsprechende Ergebnisse wurden bei Verwendung von Citronensäure-monoalkylestern anstelle der Dialkylester erhalten.

**Beispiel 5**

Beschreibung der haftvermittelnden Wirkung der Produkte nach den Beispielen 1 bis 3 in einer Nitrocellulose-Druckfarbe für Polypropylen:

Zu einer Nitrocellulose-Druckfarbe, die 25 % Nitrocellulose des Norm-Typs 34 E, gelöst in Ethanol-Ethylacetat und Titandioxid als Weißpigment enthält, wurden 4 Gew.-% der erfindungsgemäßen entsprechend den Beispielen 1 bis 3 erhaltenen Titanchelatkomplexe (siehe Tabelle) gegeben und einige Minuten eingerührt. Mittels einer Filmziehspirale wurde die so modifizierte Druckfarbe in einer Naßschichtdicke von 12 $\mu$m auf koronavorbehandelte Polypropylenfolie aufgezogen und nach 15 Minuten Lufttrocknung 1 Minute bei 60 °C im Umluftschrank nachgetrocknet. Anschließend wurde die Haftung der Druckfarbe auf dem Polypropylen mittels Klebeband-Abriß ermittelt:

Auf eine Fläche von ca. 4 $cm^2$ wurde ein Klebefilmstreifen (z. B. Tesafilm) aufgeklebt und in einem Ruck wieder abgezogen.

| Tabelle der Ergebnisse | |
|---|---|
| Additiv | Abriß von ... % der Farbschicht |
| Nach Beispiel 1 (aus Ethyltitanat) | ca. 5 % |
| Nach Beispiel 2 (aus Isopropyltitanat) | ca. 2 % |
| Nach Beispiel 3 (aus Butyltitanat) | ca. 5 % |
| Titanacetylacetonat (zum Vergleich) | ca. 5 % |

Der Vergleich mit dem Titanacetylacetonat wurde in gleicher Weise und mit den gleichen Mengen durchgeführt. Es wurde gegenüber TiACA gleiche bzw. bessere (Beispiel 2) Haftung ermittelt.

Beispiel 6

Prüfung der Reaktion der erfindungsgemäßen Titanchelatkomplexe mit Antioxidantien:

Beim Vermischen von Butylhydroxianisol-(BHA)-Lösungen mit Titanacetylacetonat-Lösungen tritt eine starke Verfärbung auf. Da Verbindungen wie BHA als Antioxidantien auch in zu bedruckenden Folien enthalten sind, wurde die Reaktion von Lösungen der erfindungsgemäßen Produkte geprüft in einer Lösung von BHA, von BHT (2,6-Di-tert. Buthyl-p-Kresol), von HY (Hydrochinon) und von MP (4-Methoxyphenol).
Die Verfärbung ist wesentlich geringer, somit ist auch die Vergilbungsgefahr beim Bedrucken von Folien mit Druckfarben, die die erfindungsgemäßen Produkte enthalten, als deutlich geringer anzusehen.

Tabelle der Ergebnisse

(Mischung 1%iger Lösungen in Isopropanol)

| Additiv | Farbzahl nach Gardner | | | |
|---|---|---|---|---|
| | BHA | BHT | HY | MP |
| Titanacetylacetonat | 11 | 3-4 | 10 | 8 |
| Titankomplex nach Beispiel 1 | 3 | 2 | 6 | 4 |
| Titankomplex nach Beispiel 2 | 2 | 2 | 6 | 4 |
| Titankomplex nach Beispiel 3 | 3 | 2 | 5 | 4 |

Demnach ist die Verfärbung durch Antioxidantien der erfindungsgemäßen Titanchelate erheblich geringer als von TiACA.

Beispiel 7

Viskositätsverhalten einer NC-Farbe nach Zusatz der erfindungsgemäßen Titanchelatkomplexe:

Als Prüfmedium diente eine 25 % esterlösliche Nitrocellulose enthaltende weiße Druckfarbe, der 4 % der zu prüfenden Substanzen zugesetzt wurden. Die Viskosität wurde mit einem Rotationsviskosimeter bestimmt, gelagert wurde zwischen den Messungen bei 50 ° C.

| Tabelle der Ergebnisse | | | | | |
|---|---|---|---|---|---|
| Additiv | Viskosität in mPa · s nach ... Lagerzeit bei 50 °C | | | | |
| | 1 Tag | 1 Woche | 2 Wochen | 1 Monat | 2 Monate |
| Titanacetylacetonat | 560 | 480 | 480 | 440 | 850 |
| Titanchelatkomplex gemäß Beispiel 2 | 600 | 470 | 460 | 530 | 900 |

Beispiel 8

Remissionskurven weißer Anioxidantien enthaltender Druckfarben in Abhängigkeit vom zugesetzten Additiv:

Eine Nitrocellulose-Druckfarbe, die 25 Gew-% Nitrocellulose des Norm-Typs 34 E, gelöst in Ethanol-Ethylacetat, Titandioxid als Weißpigment und zusätzlich 1 Gew-% Butylhydroxyanisol (BHA) als Antioxidans enthält, wird einmal ohne weiteren Zusatz, einmal mit einem Zusatz von 4 Gew-% TiACA und zum anderen mit Zusätzen von je 4 % Titanchelat nach Beispiel 1-3 mit der Filmziehspirale in einer Naßschichtdicke von 36μm auf Polypropylenfolien aufgezogen und nach dem Trocknen im Farbmeßgerät Datacolor 3890 auf Remission geprüft.

In Abhängigkeit von der Wellenlänge λ (nm) des eingestrahlten Lichts ergeben sich folgende Remissionswerte (in %):

| Weißfarbe mit 1 % BHA-Zusatz | Remission bei λ = | | | | | |
|---|---|---|---|---|---|---|
| | 400 nm | 450 nm | 500 nm | 550 nm | 600 nm | 700 nm |
| ohne Additiv | 60 | 77 | 78 | 79 | 80 | 79 |
| mit 4 % TiACA | 13 | 17 | 30 | 56 | 73 | 78 |
| mit 4 % Titanchelat nach Bsp.1 | 45 | 58 | 65 | 73 | 74 | 75 |
| mit 4 % Titanchelat nach Bsp.2 | 44 | 57 | 66 | 74 | 77 | 77 |
| mit 4 % Titanchelat nach Bsp.3 | 48 | 62 | 70 | 77 | 79 | 79 |

Während der BHA-Zusatz allein praktisch keine Verfärbung erzeugt, verfärbt die zusätzliche Verwendung von Titanacetylacetonat nach tief-orange, diejenige von erfindungsgemäßen Titanchelaten jedoch nur kaum sichtbar gelblich.

Beispiele 9 bis 11

Die Beispiele 1 bis 4 wurden wiederholt, wobei jedoch 2 Mole Monoethylcitrat mit 1 Mol Tetraethyltitanat (Bsp. 9), 2 Mole Monoethylcitrat mit 1 Mol Tetrabutyltitanat (Bsp. 10) bzw. 1 Mol Monoethylcitrat mit 1 Mol Tetrabutyltitanat (Bsp. 11) bei 80 °C eingesetzt wurden.

Es entstanden Bis-(monoetyhlcitrato)-diethyl-titanat (Bsp. 9)
Bis-(monoethylcitrato)-dibutyl-titanat (Bsp. 10)
Monoethylcitrato-trietyhl-titanat (Bsp. 11) in Lösung des jeweiligen bei der Reaktion freigewordenen Alkohols.

Abdampfen des Alkohols wie in den Beispielen 1 bis 4 und Elementaranalyse des Rückstandes bestätigte die jeweiligen Formeln und errechneten Molekulargewichte.

**Patentansprüche**

1. Alkoxy-Titan(IV)-chelate, **dadurch gekennzeichnet,** daß sie als Chelatbildner Zitronensäurealkylester aufweisen.

2. Alkoxy-Titan(IV)-chelate gemäß Anspruch 1, dadurch gekennzeichnet, daß das Verhältnis der an das zentrale Ti-Atom gebundenen Alkoxygruppen zu den Zitronensäureestergruppen zwischen 1 : 1 und 3 : 1 liegt.

**3.** Alkoxy-Titan(IV)chelate gemäß Ansprüchen 1 oder 2, dadurch gekennzeichnet, daß die Alkoxygruppen solche mit den Resten $C_2H_5$, $C_3H_7$ oder $C_4H_9$ sind und der Zitronensäureesterrest ein Rest eines Zitronensäuredialkylesters oder -monoalkylesters ist.

**4.** Lösungen von Alkoxy-Titan(IV)-chelaten gemäß einem der Ansprüche 1 bis 3 in solchen Alkoholen, deren Alkylrest demjenigen der Alkoxygruppe des Titanchelats entspricht.

**5.** Verfahren zur Herstellung von Alkoxy-Titan(IV)-chelaten gemäß einem der Ansprüche 1 bis 3, dadurch gekennzeichnet, daß man Titansäureester mit Zitronensäurealkylestern umsetzt und den bei der Umsetzung frei werdenden Alkohol abdestilliert.

**6.** Verfahren zur Herstellung von alkoholischen Lösungen der Titanchelate gemäß Anspruch 4, dadurch gekennzeichnet, daß man Titansäureester mit Zitronensäurealkylestern bei Temperaturen zwischen 20 und 100 ° C umsetzt und das erhaltene Reaktionsprodukt auf den gewünschten Alkoholgehalt einstellt.

**7.** Verwendung von Titanchelat-Lösungen gemäß Anspruch 4 in Druckfarben.

**Claims**

**1.** Alkoxy-titanium (IV)-chelates, characterised in that they have citric acid alkylesters as chelate formers.

**2.** Alkoxy-titanium (IV)-chelates according to Claim 1, characterised in that the ratio of the alkoxy groups bound to the central Ti atom to the citric acid ester groups is between 1 : 1 and 3 : 1.

**3.** Alkoxy-titanium (IV)-chelates according to Claims 1 or 2, characterised in that the alkoxy groups are those with the residue $C_2H_5$, $C_3H_7$ or $C_4H_9$ and the citric acid ester residue is a residue of a citric acid dialkylester or monoalkylester.

**4.** Solutions of alkoxy-titanium (IV)-chelates according to one of Claims 1 to 3 in those alcohols whose alkyl residue corresponds to that of the alkoxy group of the titanium-chelate.

**5.** Process for the preparation of alkoxy-titanium (IV)-chelates according to one of Claims 1 to 3, characterised in that titanic acid esters are reacted with citric acid alkylesters and the alcohol being liberated in the reaction is distilled off.

**6.** Process for the preparation of alcoholic solutions of titanium-chelates according to Claim 4, characterised in that titanic acid esters are reacted with citric acid alkylesters at temperatures between 20 and 100 ° C and the reaction product obtained is adjusted to the desired alcohol content.

**7.** Use of titanium-chelate solutions according to Claim 4 in printing inks.

**Revendications**

**1.** Chélates d'alcoxy-titane(IV), caractérisés en ce qu'ils comportent des esters alkyliques d'acide citrique en tant qu'agents chélatants.

**2.** Chélates d'alcoxy-titane(IV) selon la revendication 1, caractérisés en ce que le rapport des groupes alcoxy liés à l'atome de Ti central aux groupes esters d'acide citrique se situe entre 1:1 et 3:1.

**3.** Chélates d'alcoxy-titane(IV) selon la revendication 1 ou 2, caractérisés en ce que les groupes alcoxy sont ceux comportant les restes $C_2H_5$, $C_3H_7$ ou $C_4H_9$ et que le reste ester d'acide citrique est un reste d'un ester dialkylique ou monoalkylique d'acide citrique.

**4.** Solutions de chélates d'alcoxy-titane(IV) selon l'une des revendications 1 à 3 dans des alcools dont le reste alkyle correspond à celui du groupe alcoxy du chélate de titane.

**5.** Procédé de préparation de chélates d'alcoxy-titane(IV) selon l'une des revendications 1 à 3, caractérisé en ce que l'on fait réagir des esters titaniques avec des esters alkyliques d'acide citrique et que l'on élimine par distillation l'alcool libéré au cours de la réaction.

6. Procédé de préparation de solutions alcooliques des chélates de titane selon la revendication 4, caractérisé en ce que l'on fait réagir des esters titaniques avec des esters alkyliques d'acide citrique à des températures entre 20 et 100°C et que l'on ajuste le produit de réaction obtenu à la teneur en alcool sounaitée.

7. Utilisation de solutions de chélates de titane selon la revendication 4 dans des encres d'imprimerie.